# EUROPEAN PATENT APPLICATION

(11) **EP 4 167 183 A1**
(43) Date of publication of application: **19.04.2023**
(21) Application number: 21825579.2
(22) Date of filing: 26.04.2021
(51) Int. Cl.: G06T 7/00, G06T 1/00

(54) **INFORMATION PROCESSING DEVICE, INFORMATION PROCESSING METHOD, AND PROGRAM**

(30) Priority: 15.06.2020 JP 2020102773
(71) Applicant: Sony Group Corporation, Minato-Ku, Tokyo, 108-0075 (JP)
(72) Inventor: UCHIDA, Kengo, Tokyo 108-0075 (JP)
(74) Representative: MFG Patentanwälte Meyer-Wildhagen Meggle-Freund Gerhard PartG mbB
(86) International application number: PCT/JP2021/016643
(87) International publication number: WO 2021/256091

(57) **Abstract**

In authentication using sensor information, both reduction of processing burdens and assurance of security can be achieved.

Provided is an information processing device including an authentication unit configured to authenticate a user on the basis of collected sensor information, and the authentication unit authenticates the user on the basis of a single feature quantity extracted on the basis of sensor information collected by at least two sensors and a single registered feature quantity extracted on the basis of sensor information collected in advance by the at least two sensors.

## Description

### [Technical Field]

The present disclosure relates to an information processing device, an information processing method, and a program.

### [Background Art]

In recent years, various techniques for user authentication based on acquired sensor information have been developed. Many proposals have also been made for improving authentication accuracy. For example, PTL 1 discloses a combined authentication system configured to authenticate a user on the basis of multiple pieces of biometric information.

### [Citation List]

### [Patent Literature]

[PTL 1]
JP 2016-40684 A

### [Summary]

### [Technical Problem]

However, when authentication is based on multiple pieces of information, the processing may become more complex and the burdens on the device may increase as disclosed in PTL 1.

### [Solution to Problem]

According to an aspect of the present disclosure, provided is an information processing device including an authentication unit configured to authenticate a user on the basis of collected sensor information, and the authentication unit authenticates the user on the basis of a single feature quantity extracted on the basis of sensor information collected by at least two sensors and a single registered feature quantity extracted on the basis of sensor information collected in advance by the at least two sensors.

According to another aspect of the disclosure, provided is an information processing method including authenticating a user on the basis of collected sensor information using a processor, and the authentication step further includes authenticating a user on the basis of a single feature quantity extracted on the basis of sensor information collected by at least two sensors and a single registered feature quantity extracted on the basis of sensor information collected in advance by the at least two sensors.

According to yet another aspect of the disclosure, provided is a program causing a computer to function as an information processing device including an authentication unit configured to authenticate a user on the basis of collected sensor information, and the authentication unit authenticates a user on the basis of a single feature quantity extracted on the basis of sensor information collected by at least two sensors and a single registered feature quantity extracted on the basis of sensor information collected in advance by the at least two sensors.

### [Brief Description of Drawings]

[Fig. 1]

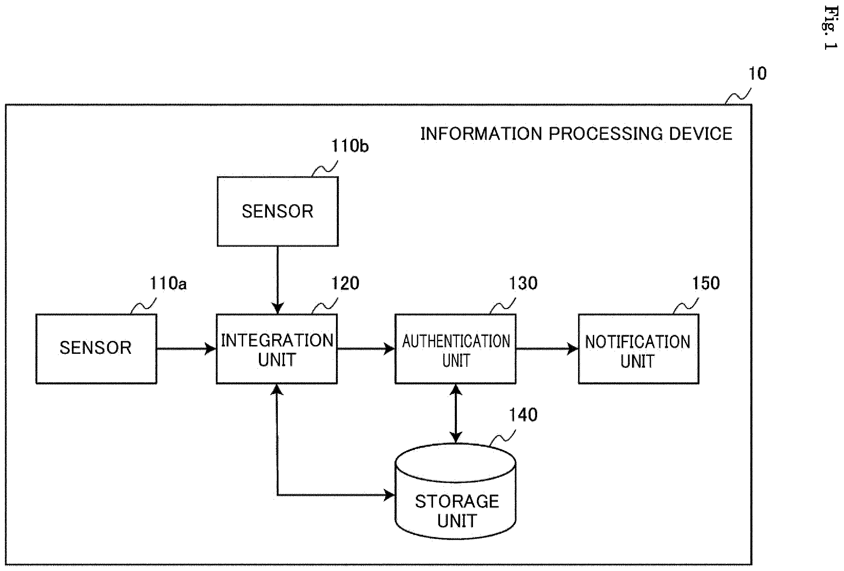

   Fig. 1 is a block diagram of an exemplary functional configuration of an information processing device 10 according to an embodiment of the present disclosure.
[Fig. 2]

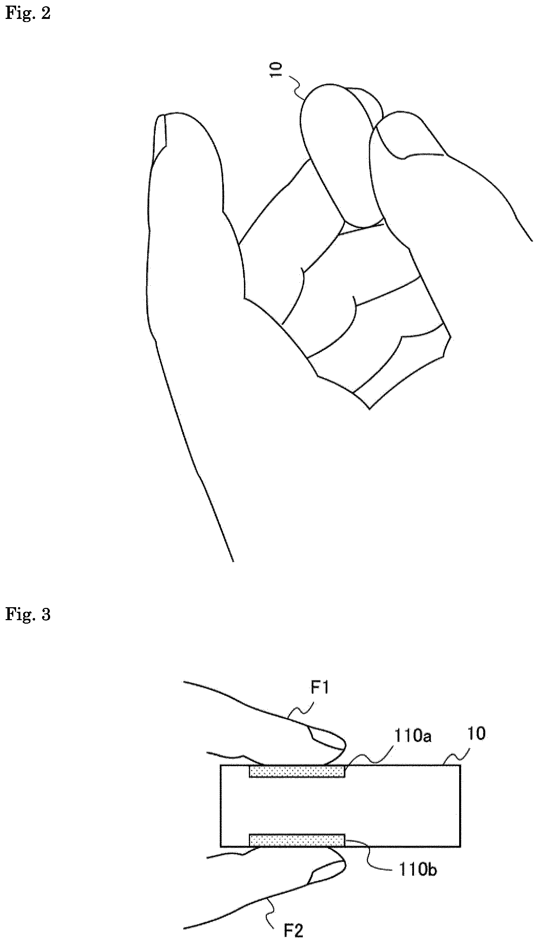

   Fig. 2 is a view for illustrating an arrangement of at least two sensors 110 according to the embodiment.
[Fig. 3]
   Fig. 3 is a view for illustrating the arrangement of the at least two sensors 110 according to the embodiment.
[Fig. 4]

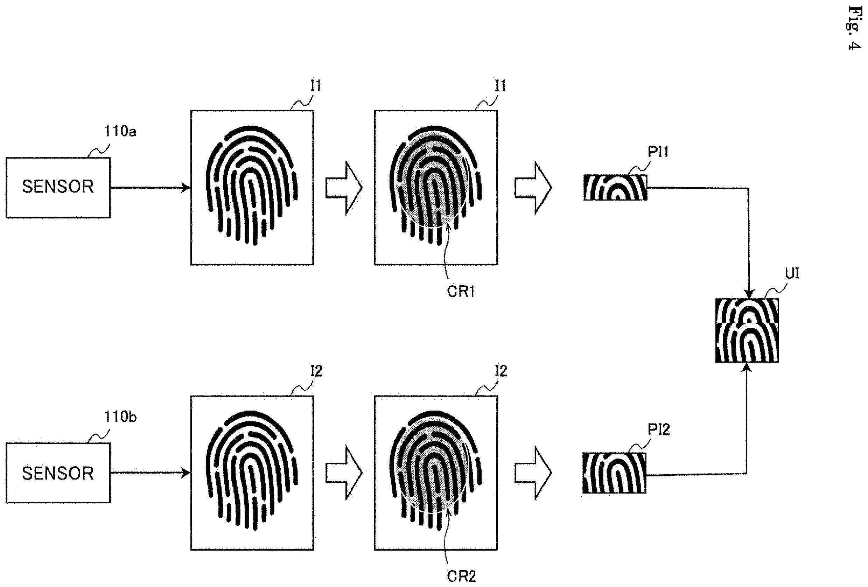

   Fig. 4 illustrates how integrated sensor information is generated by an integration unit 120 according to the embodiment.
[Fig. 5]

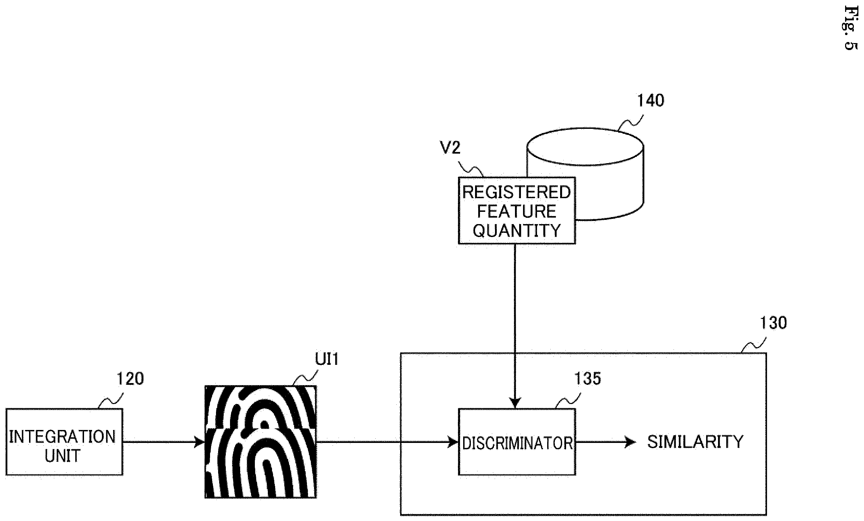

   Fig. 5 is a diagram for illustrating authentication processing performed by the authentication unit 130 according to the embodiment.
[Fig. 6]

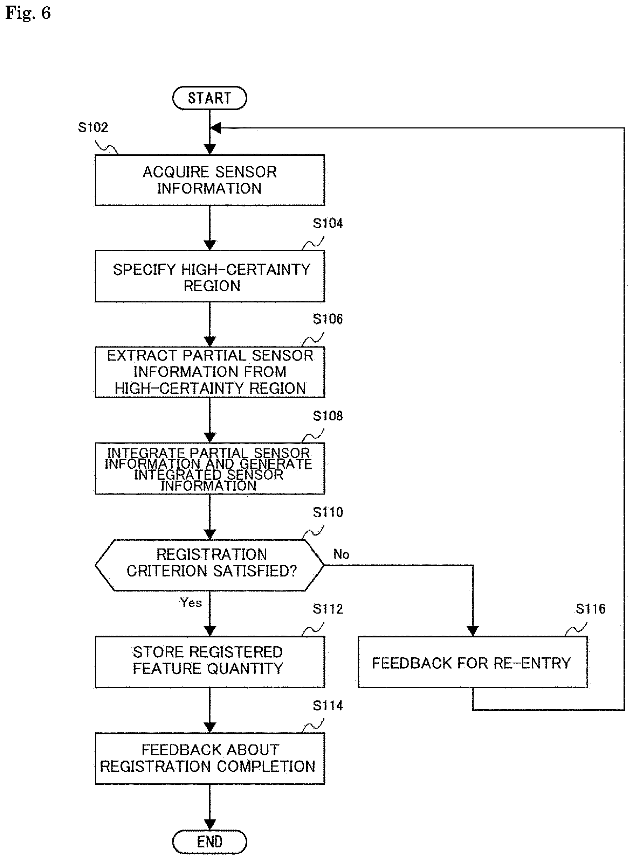

   Fig. 6 is a flowchart for illustrating an exemplary flow of processing performed by the information processing device 10 in a registration phase according to the embodiment.
[Fig. 7]

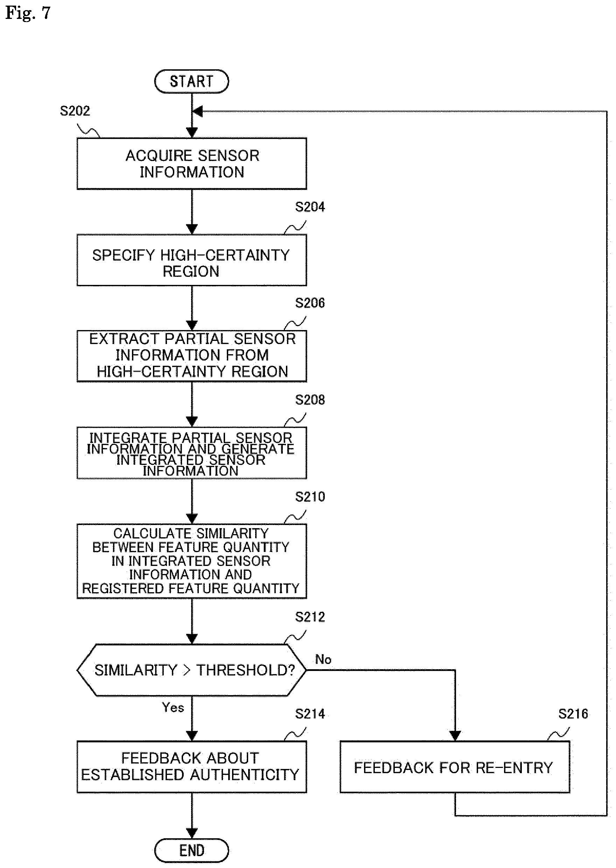

   Fig. 7 is a flowchart for illustrating an exemplary flow of processing performed by the information processing device 10 in an authentication phase according to the embodiment.
[Fig. 8]

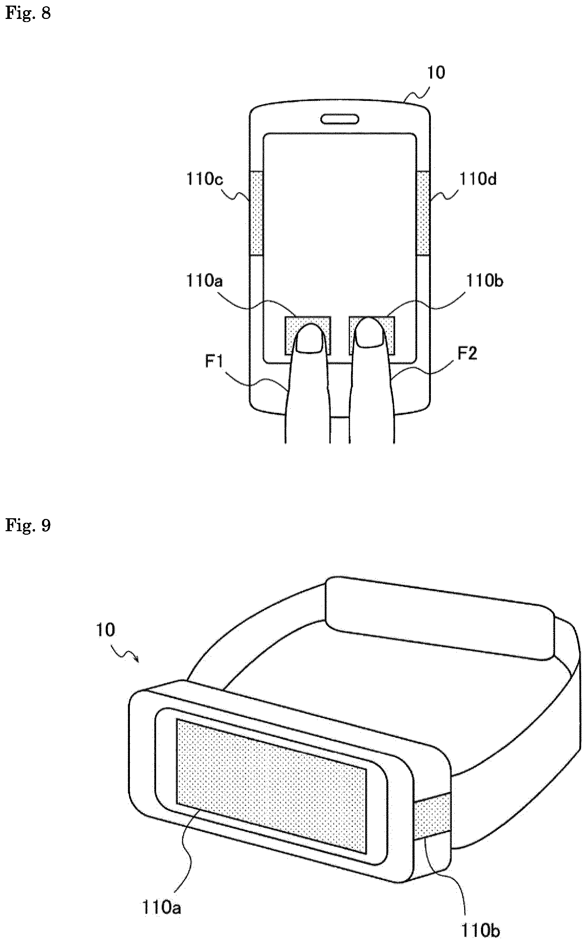

   Fig. 8 is a view of an arrangement of sensors 110 when the information processing device 10 is implemented as a smart phone.
[Fig. 9]
   Fig. 9 is a view of an arrangement of the sensors 110 when the information processing device 10 is implemented as a head mount display.
[Fig. 10]

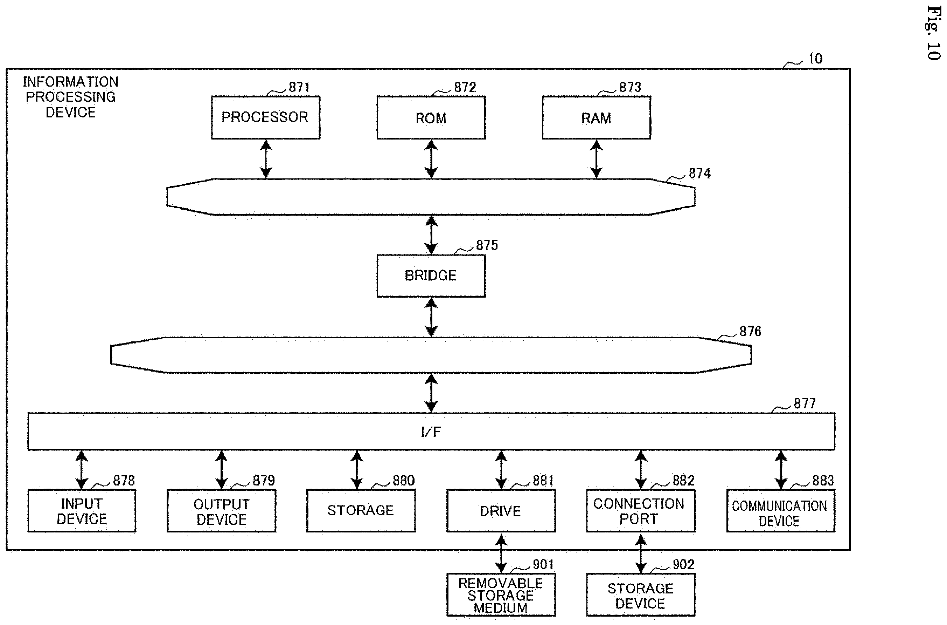

   Fig. 10 is a block diagram for illustrating an exemplary hardware configuration of the information processing device 10 according to the embodiment.

### [Description of Embodiments]

Preferred embodiments of the present disclosure will be described in detail with reference to the accompanying drawings. Note that in the specification and the drawings, components configured to have the same functions will be denoted by the same reference numerals, and therefore descriptions thereof will not be repeated.

Also, the description will be given in the following order.
1. Embodiment
   1.1. Background
   1.2. Exemplary functional configuration of information processing device 10
   1.3. Details
   1.4. Flow of processing
   1.5. Modifications
2. Exemplary hardware configuration
3. Conclusion

### <1. Embodiment>

### «1.1. Background»

As described above, various techniques for user authentication based on acquired sensor information have been developed in recent years.

The authentication techniques include acquiring biometric information such as user's fingerprints and vein patterns and performing authentication using the biometric information.

Here, when authentication based on a single input is performed, the decision criteria (such as a determination threshold regarding the similarity between an acquired fingerprint and a registered fingerprint) must be strictly set in order to prevent a third party from being misidentified as an authorized user.

However, when, for example, an image of a fingerprint is acquired and used for authentication, the acquired image is prone to differences due to differences in the condition or shooting position of the user's finger and other differences in the environment in which the image was taken.

Therefore, in an environment where sensor information acquired is prone to variations as described above, sufficient characteristics may not be captured to determine that the user is an authorized user, and the authenticity of the user may not be verified even if the user is an authorized user. In addition, it often takes multiple attempts before a user is determined to be a legitimate user, which is a factor that reduces usability.

In order to avoid the situation, combined authentication based on multiple pieces of acquired sensor information may be considered.

In this case, for example, the criteria for individual authentication may be relaxed by combining multiple kinds of authentication such as fingerprint authentication and vein pattern authentication.

However, in this case, since the criterion must be met in each of the multiple kinds of authentication, it can be difficult to establish authentication (to verify user authenticity) if low-level sensor information is used in any of the kinds of authentication.

In view of the above situation, according to the feature disclosed in PTL 1, if any of the authentication kinds fails to establish the authenticity of a user, final determination is made by evaluating the result of the authentication in question and the results of the other kinds of authentication in combination.

According to the feature disclosed in PTL 1 the probability of successful authentication may be increased, which may improve usability.

Meanwhile, even according to the feature disclosed in PTL 1, the processing may become more complex and the burden on the device may increase when multiple kinds of authentication are performed in combination.

With the foregoing in view, the technical idea of the present disclosure was conceived, and both reduction of the processing burdens and assurance of security can be achieved in authentication using sensor information.

To this end, the information processing device 10 according to one embodiment of the present disclosure includes an authentication unit 130 that performs authentication based on collected sensor information. In addition, one of the features of the authentication unit 130 according to the embodiment of the present disclosure is that the unit authenticates a user on the basis of a single feature quantity extracted on the basis of sensor information collected by at least two sensors 110 and a single registered feature quantity extracted on the basis of sensor information collected in advance by the at least two sensors 110.

Hereinafter, an exemplary functional configuration of the information processing device 10 with the above-described feature will be described in detail.

### «1.2. Exemplary functional configuration of information processing device 10»

Fig. 1 is a block diagram of an exemplary functional configuration of the information processing device 10 according to the embodiment of the present disclosure. The information processing device 10 according to the embodiment may be any of various kinds of devices configured to authenticate a user on the basis of sensor information.

The information processing device 10 may be implemented for example as a smart phone, a tablet, a PC or a wearable device. An example of the wearable device is an earable device (hearable device) that is worn on the user's ear.

As illustrated in Fig. 1, the information processing device 10 according to the embodiment may include at least two sensors 110, an integration unit 120, an authentication unit 130, a storage unit 140 and a notification unit 150.

### (Sensor 110)

The sensor 110 according to the embodiment acquires sensor information about the physical and operational characteristics of the user. The sensor information according to the embodiment includes biometric information about the user. Examples of biometric information include images of fingerprints, veins, iris, face, or postures and recorded voice.

In the example shown in Fig. 1, the information processing device 10 according to the embodiment includes two sensors 110a and 110b. Meanwhile, the number of sensors 110 according to the embodiment is not limited to this example. The information processing device 10 according to the embodiment may include three or more sensors 110.

Each of the at least two sensors 110 according to the embodiment may acquire the same kind of biometric information about a user.

As an example, each of the sensors 110a and 110b according to the embodiment may be an imaging sensor that captures user's fingerprints.

Meanwhile, the at least two sensors 110 according to the embodiment may acquire different types of biometric information.

As an example, the sensor 110a according to the embodiment is an imaging sensor that captures an image of the iris of the user, and the sensor 110b may be a microphone that collects the user's voice.

### (Integration unit 120)

The integration unit 120 according to the embodiment integrates pieces of sensor information acquired by the at least two sensors 110 and generates integrated sensor information.

In this case, the integration unit 120 may integrate partial sensor information extracted from each of the sensor information acquired by the at least two sensors to generate integrated sensor information.

The functions of the integration unit 120 according to the embodiment are implemented by various processors. The details of the functions of the integration unit 120 according to the embodiment will be described separately.

### (Authentication unit 130)

The authentication unit 130 according to the embodiment authenticates a user on the basis of collected sensor information. In this case, one of the features of the authentication unit 130 according to the embodiment is that the unit authenticates the user on the basis of a single feature quantity extracted on the basis of sensor information collected by at least two sensors 110 and a single registered feature quantity extracted on the basis of sensor information collected in advance by the at least two sensors 110.

In this case, the authentication unit 130 according to the embodiment authenticates the user on the basis of a single feature quantity extracted from integrated sensor information generated by the integration unit 120 and the above registered feature.

The functions of the authentication unit 130 according to the embodiment are implemented by various processors. The details of the functions of the authentication unit 130 according to the embodiment will be described separately.

### (Storage unit 140)

The storage unit 140 according to the embodiment stores various kinds of information used in the information processing device 10. For example, the storage unit 140 stores programs to be used by the integration unit 120, the authentication unit 130, and the notification unit 150.

For example, the storage unit 140 stores the above-described registered features and integrated sensor information.

### (Communication unit 150)

The notification unit 150 according to the embodiment performs notification to the user on the basis of the result of the authentication of the user by the authentication unit 130.

For example, the notification unit 150 according to the embodiment provides feedback indicating that authentication has been established or requesting the user to re-enter biometric information.

For this purpose, the notification unit 150 according to the embodiment includes for example various displays for displaying visual information, speakers and amplifiers for outputting sound.

The exemplary functional configuration of the information processing device 10 according to the embodiment has been described above. The above-mentioned functional configuration described with reference to Fig. 1 is merely an example, and the functional configuration of the information processing device 10 according to the embodiment is not limited to such an example.

For example, the information processing device 10 according to the embodiment may include an additional elements other than those shown in Fig. 1. For example, the information processing device 10 according to the embodiment may further include a processing unit that executes various kinds of processing on the basis of the result of authentication by the authentication unit 130.

The functions described above may be realized by cooperation among a plurality of device. For example, the sensor 110 may be provided in a sensor device separate from the information processing device 10. In this case, the information processing device 10 may perform each kind of processing on the basis of sensor information received from the sensor device over a network.

The functional configuration of the information processing device 10 according to the embodiment can be modified in a flexible manner according to the specifications and operations.

### «1.3. Details»

Next, the characteristics of the functions of the information processing device 10 will be described in detail. First, characteristic of the arrangement of the sensors 110 of the information processing device 10 according to the embodiment will be described.

When authentication based on biometric information is performed, the user is generally required to perform an action to input biometric information to the device. However, such action can be burdensome to the user as the number of authentication attempts or the number of times the device is used increases.

For this reason, the at least two sensors 110 according to the embodiment may be arranged in a position where biometric information about the user is more likely to be acquired when the user wears or uses the information processing device 10.

In the following description, the information processing device 10 according to the embodiment is an earable that is worn on the user's ear by way of illustration. In addition, a user's fingerprint is used as a main example of the biometric information used for authentication in the following description.

Figs. 2 and 3 are views for illustrating an arrangement of the at least two sensors 110 according to the embodiment.

In the scene shown in Fig. 2, a user is pinching the information processing device 10, which is an ear-able device, with his or her fingers as the user puts the information processing device 10 on his or her ear.

In the operation, the area where the user's fingers come into contact with the information processing device 10 is likely to be limited naturally because of the shape of the information processing device 10. As for a small-size device such as the earable device, the area may be particularly limited.

In view of the above, the at least two sensors 110 according to the embodiment may be arranged in the area where the user's fingers are expected to come into contact with the information processing device 10.

In the example shown in Fig. 3, the sensor 110a is arranged in a position expected to be contacted by the user's finger F1 when the user wears the information processing device 10. The sensor 110b is arranged in a position expected to be contacted by the finger F2.

According to the above arrangement of the sensors 110, an image of the fingerprint can be taken without difficulty in the natural movement of the user when he/she wears or uses the information processing device 10, which effectively reduces the burdens on the user for inputting biometric information such as viewing the position of the sensor 110 each time.

According to the arrangement of the sensors 110 as described above, variations in the angles and positions of the fingers F in contact with the sensors 110 can be reduced, and the accuracy of authentication may be improved.

Next, generation of the integrated sensor information according to the embodiment will be described. The authentication unit 130 may authenticate a user on the basis of integrated sensor information obtained by integrating pieces of sensor information acquired by the sensors 110.

According to the processing, authentication based on multiple pieces of sensor information can be realized in a single occasion of processing, which may effectively reduce the burdens on the information processing device 10.

Fig. 4 illustrates how integrated sensor information is generated by the integration unit 120 according to the embodiment. Fig. 4 shows how the integrated sensor information UI is generated from images I1 and I2 acquired by the two sensors 110a and 110b.

In generating the integrated sensor information UI, the integration unit 120 may first identify a high-certainty region CR with a high level of certainty that the region corresponds to user's biometric information in each piece of sensor information acquired from the at least two sensors 110.

In the example shown in Fig. 4, the integration unit 120 identifies a high-certainty region CR1 with a high level of certainty that the region corresponds to the user's fingerprint in the image I1 acquired by the sensor 110a.

Similarly, the integration unit 120 identifies a high-certainty region CR2 with a high level of certainty that the region corresponds to the user's fingerprint in the image I2 acquired by the sensor 110b.

In order to identify the high-certainty regions CR as described above, a neural network trained to recognize biometric information to be used for authentication and other information and calculate a certainty level for the biometric information may be used.

For example, in fingerprint authentication, a recognition task may be set to distinguish between an area in an acquired image that can be estimated as fingerprint valley lines and an area that cannot be estimated as fingerprint valley lines, and learning may be performed on the basis of whether each area can be determined as an area with an estimated error which is at most equal to a certain constant.

The integration unit 120 according to the embodiment calculates a level of certainty using the neural network trained as described above, and the high-certainty region CR may be specified on the basis of the level of certainty.

The integration unit 120 according to the embodiment also extracts partial sensor information PI from each of the specified certainty regions CR and integrates the extracted partial sensor information PI to generate the integrated sensor information UI.

According to the processing, only the areas of the acquired sensor information that correspond highly certainly to target biometric information can be treated as inputs, which can improve the accuracy of authentication and effectively reduce the number of authentication attempts.

In the example shown in Fig. 4, the integration unit 120 extracts the partial sensor information PI1 from the high-certainty region CR1 identified in the image I1 acquired by the sensor 110a.

Similarly, the integration unit 120 extracts the partial sensor information PI2 from the high-certainty region CR2 identified in the image I2 acquired by the sensor 110b.

The integration unit 120 also integrates the extracted partial sensor information PI1 and the partial sensor information PI2, and generates the integrated sensor information UI.

In this way, the integration unit 120 according to the embodiment partially crops the sensor information in the area with a high level of certainty as biometric information to be used for authentication, and the cropped sensor information may be synthesized to have the processing size in the succeeding stage to be performed by the authentication unit 130.

Note that in this case, the images I1 and I2 acquired by the sensors 110a and 110b may have a size equal to or larger than the processing size in the succeeding stage.

For example, assume that the high-certainty region CP1 in the image I1 and the high-certainty region CP2 in the image I2 are in the ratio of α:β (α + β = 1). In this case, the integration unit 120 may perform cropping and synthesization to have partial sensor information PI1 and partial sensor information P2 so that the partial sensor information PI1 and the partial sensor information P2 in the generated integrated sensor information UI are in the ratio of α:β.

Meanwhile, the integration unit 120 may only use the calculated certainty level to determine the position when cropping the image into the partial sensor information PI at a fixed ratio of the same area (1:1).

The integration unit may also superimpose multiple images in a probability distribution (such as a beta distribution Beta(α,β)) (or in the equal ratio of 1:1) so that the ratio of the partial sensor information PI is α:β, as a vector sum with outputs in the distribution as weights.

Next, extraction of feature quantities from the integrated sensor information UI according to the embodiment will be described. Prior to the authentication phase, a feature quantity extracted from the integrated sensor information UI is stored in the storage unit 140 to be used as user-derived reference information in the authentication phase. In the present disclosure, the above feature quantity will be referred to as a registered feature quantity.

In the authentication phase, a single feature quantity is extracted from the integrated sensor information UI generated on the basis of sensor information acquired in real time and used for comparison with a registered feature quantity.

A machine learning-based method may be used for feature quantity extraction from the integrated sensor information UI according to the embodiment.

The authentication unit 130 according to the embodiment may perform feature quantity extraction using an extractor that converts the entire integrated sensor information UI into a single feature quantity (feature vector).

As an example, the extractor may be generated by learning based on such a loss criterion that the similarity between feature quantities extracted from integrated sensor information UI and derived from the same user is high and the similarity between feature quantities extracted from integrated sensor information UI and derived from different users is low.

The extractor may be shared with a discriminator that calculates the similarity between feature quantities by the authentication unit 130.

Subsequently, the authentication processing by the authentication unit 130 according to the embodiment will be described in detail. Fig. 5 is a diagram for illustrating the authentication processing by the authentication unit 130 according to the embodiment.

The authentication unit 130 according to the embodiment may verify the authenticity of a user when the similarity between a single feature quantity V1 extracted from integrated sensor information UI1 generated by the integration unit 120 on the basis of sensor information acquired in real time and a registered feature quantity V2 stored in the storage unit 140 exceeds a threshold.

In this case, the authentication unit 130 according to the embodiment may authenticate the user using a discriminator 135 that calculates the similarity on the basis of the single feature quantity extracted from the input integrated sensor information UI1 and the registered feature quantity UI2.

When multiple pieces of information are mixed in the input as in this embodiment, it is difficult to respond on a rule basis only with the granularity of a general feature quantity in biometric information (such as fingerprint minutia) as an indicator to identify the person.

For this reason, means for capturing an image as a feature vector using a neural network is effective in order to handle the feature of the integrated image as a whole and microlocal feature quantities.

As an example, the discriminator 135 according to the embodiment is generated by a deep metric learning approach that enables neural network-based learning of such a feature quantity extraction mechanism that an input group derived from a person of interest can be separated from an input group derived from others (other than the person of interest) such that the similarity therebetween in the layers of feature quantities (feature vectors) is sufficiently low and the similarity between feature quantities of the input group derived from the person of interest is sufficiently high.

This can be achieved by realizing a feature extraction network that allows complex features of an image to be extracted by combining filter representation based on image convolution and pooling in high layers by optimizing a loss function for metric learning.

The learning described above may use inputs with the same specifications as the integrated sensor information UI, or inputs that have been augmented in the manner of data augmentation during input creation in learning from a non-integrated image set.

Since the ratio of partial sensor information PI is expected to change between attempts in the integrated sensor information UI according to the embodiment, inputs that allow for variations in the ratio to be available may be prepared in the learning for generating the discriminator 135.

The discriminator 135 generated by learning with the inputs is defined to be able to identify a user almost independently of the above-described ratio, when the integrated sensor information UI includes sufficient feature information.

Using the integrated sensor information UI obtained by integrating multiple pieces of sensor information as in this embodiment, authentication with greater robustness with respect to inputs of others who have a quite close feature quantity in relation to a single feature point (such as fingerprint minutia) may be provided.

### «1.4. Flow of processing»

Next, the flow of processing performed by the information processing device 10 will be described in detail. The processing by the information processing device 10 according to the embodiment can be roughly divided into two phases: a registration phase in which registered features are stored, and an authentication phase in which authentication is performed by the authentication unit 130.

First, the flow of processing in the registration phase according to the embodiment will be described. Fig. 6 is a flowchart for illustrating an exemplary flow of processing performed by the information processing device 10 in the registration phase according to the embodiment.

To start with, at least two sensors 110 acquire sensor information (S102). The sensor information includes user biometric information as described above.

Then, the integration unit 120 identifies a high-certainty region in each of pieces of sensor information acquired in step S102 (S104).

Next, the integration unit 120 extracts partial sensor information from the high-certainty region identified in step S104 (S106).

The step of identifying the high-certainty region in step S104 and the step of extracting the partial sensor information in step S106 need not be clearly separated as processing. For example, the step of identifying the high-certainty region in step S104 and the step of extracting the partial sensor information in step S106 may be realized as a series of processing steps using a trained neural network.

Then, the integration unit 120 integrates the partial sensor information extracted in step S106 and generates integrated sensor information (S108).

Then, the authentication unit 130 determines whether a feature quantity extracted from the integration sensor information generated in step S108 satisfies a registration criterion (S110).

If the feature quantity satisfies the registration criterion (Yes in S110), the feature quantity is registered as a registered feature quantity in the storage unit 140 (S 112).

In addition, the notification unit 150 presents the user with feedback indicating that the registration has been completed (S114).

Meanwhile, if the extracted feature quantity does not satisfy the registration criterion (No in S110), the notification unit 150 presents the user with feedback to request re-entry (S116), and the information processing device 10 returns to step S102.

Next, the flow of processing performed by the information processing device 10 in the authentication phase according to the embodiment will be described. Fig. 7 is a flowchart for illustrating an exemplary flow of processing performed by the information processing device 10 in the authentication phase according to the embodiment.

The processing in steps S202 to S208 in Fig. 7 may substantially be identical to the processing in steps S102 to S108 in Fig. 6 and therefore will not be described in detail.

When integrated sensor information is generated in step S208, the authentication unit 130 calculates the similarity between a feature quantity and a registered feature quantity stored in the storage unit 140 (S210).

The authentication unit 130 may perform the similarity calculation using the discriminator 135 described above.

Then, the authentication unit 130 determines whether the similarity calculated in step S210 exceeds a threshold (S212).

Here, if the similarity exceeds the threshold (Yes in S212), the authentication unit 130 verifies the authenticity of the user, and the notification unit 150 presents the user with feedback indicating that the authentication has been established (S214).

Meanwhile, if the similarity does not exceed the threshold (No in S212), the authentication unit 130 does not verify the authenticity of the user, and the notification unit 150 presents the user with feedback to request the user for re-entry (S216).

Alternatively, if the similarity does not exceed the threshold (No in S212), authentication may be performed according to the conventional method by checking the pieces of sensor information acquired in step S202.

### «1.5. Modifications»

As in the foregoing, the information processing device 10 according to the embodiment allows the authentication processing based on multiple pieces of sensor information to be simplified, so that both reduction of the processing burdens and assurance of security can be achieved.

The processing and features of the information processing device 10 described above are only examples, and the information processing device 10 according to the embodiment can be modified in a flexible manner according to specifications and operations.

In the example described above, the information processing device 10 according to the embodiment is an earable device as a typical example, but the information processing device 10 according to the embodiment may be a different type of device such as a smart phone.

Fig. 8 is a view of an exemplary arrangement of the sensors 110 when the information processing device 10 according to the embodiment is implemented as a smart phone.

When the information processing device 10 according to the embodiment is implemented as a smart phone, at least two sensors 110 are arranged at the backside of the touch panel like sensors 110a and 110b shown in the figure to capture images of the fingerprints of the user's fingers F1 and F2 in contact with the touch panel, respectively.

The at least two sensors 110 may also be provided on the lateral side of the information processing device 10, which is a smart phone, like the sensors 110c and 110d as in the figure. In this case, images of the fingerprints of the fingers of a user grasping the information processing device 10 with one hand can be efficiently captured without the user being aware of it.

The information processing device 10 according to the embodiment may be a wearable device such as a bed-mounted display.

Fig. 9 is a view of an exemplary arrangement of the sensors 110 when the information processing device 10 according to the embodiment is implemented as a head-mounted display.

In the example shown in Fig. 9, the sensor 110a may be an imaging sensor that captures an image of the user's iris.

In addition, the sensor 110b may be an imaging sensor that captures an image of a fingerprint of the user in contact therewith or a microphone that collects the user's voice.

In this way, the at least two sensors 110 according to the embodiment may acquire different kinds of biometric information.

When the sensor 110b is a microphone that collects the user's voice, the integration unit 120 may convert the collected voice into a spectral image using for example a short-time Fourier transform and extract partial sensor information from the spectral image.

When integrating different types of biometric information and it is difficult to calculate a certainty level, the integration unit 120 may convert multiple images into feature vectors by means of a neural network instead of generating integrated information in layers of images, and then integration may be performed as a weighted sum of vectors in the vectorized layer (generally, the layer before substitution to the loss function in learning is performed).

### <2. Exemplary hardware configuration>

Next, a hardware configuration example of the information processing device 10 according to an embodiment of the present disclosure will be described. Fig. 10 is a block diagram illustrating a hardware configuration example of the information processing device 10 according to the embodiment of the present disclosure.

As described in Fig. 10, the information processing device 10 includes a processor 871, a ROM 872, a RAM 873, a host bus 874, a bridge 875, an external bus 876, an interface 877, an input device 878, an output device 879, a storage 880, a drive 881, a connection port 882, and a communication device 883, for example. The hardware configuration illustrated herein is an example, and some of the components may be omitted. Further, components other than the components illustrated herein may be further included.

### (Processor 871)

The processor 871 functions as, for example, an arithmetic processing device or a control device, and controls all or some of the operations of the components on the basis of various types of programs recorded in the ROM 872, the RAM 873, the storage 880, or a removable recording medium 901.

### (ROM 872, RAM 873)

The ROM 872 is a means for storing a program read into the processor 871, data used for computation, and the like. In the RAM 873, for example, a program read into the processor 871, various types of parameters that change as appropriate when the program is executed, and the like are temporarily or permanently stored.

### (Host bus 874, bridge 875, external bus 876, interface 877)

The processor 871, the ROM 872, and the RAM 873 are connected to each other via, for example, the host bus 874 capable of high-speed data transmission. Meanwhile, the host bus 874 is connected to the external bus 876 with a relatively low data transmission speed via, for example, the bridge 875. The external bus 876 is connected to various components via the interface 877.

### (Input device 878)

For the input device 878, for example, a mouse, a keyboard, a touch panel, buttons, switches, levers, and the like are used. As the input device 878, a remote controller capable of transmitting a control signal using infrared rays or other radio waves may be used. The input device 878 also includes a voice input device such as a microphone.

### (Output device 879)

The output device 879 is, for example, a device capable of notifying users of acquired information visually or audibly, such as a display device such as a CRT (Cathode Ray Tube), an LCD, or an organic EL, an audio output device such as a speaker or a headphone, a printer, a mobile phone, a facsimile, or the like. The output device 879 according to the present disclosure includes various types of vibration devices capable of outputting tactile stimuli.

### (Storage 880)

The storage 880 is a device for storing various types of data. As the storage 880, for example, a magnetic storage device such as a hard disk drive (HDD), a semiconductor storage device, an optical storage device, a magneto-optical storage device, or the like is used.

### (Drive 881)

The drive 881 is a device that reads information recorded on the removable recording medium 901 such as a magnetic disk, an optical disk, a magneto-optical disk, or a semiconductor memory, or writes information to the removable recording medium 901.

### (Removable recording medium 901)

The removable recording medium 901 is, for example, a DVD medium, a Blu-ray (registered trademark) medium, an HD DVD medium, various semiconductor storage media, or the like. Naturally, the removable recording medium 901 may be, for example, an IC card equipped with a non-contact type IC chip, an electronic device, or the like.

### (Connection port 882)

The connection port 882 is a port for connecting an external connection device 902 such as a Universal Serial Bus (USB) port, an IEEE1394 port, a Small Computer System Interface (SCSI), an RS-232C port, or an optical audio terminal.

### (External connection device 902)

The external connection device 902 is, for example, a printer, a portable music player, a digital camera, a digital video camera, an IC recorder, or the like.

### (Communication device 883)

The communication device 883 is a communication device for connecting to a network, and is, for example, a communication card for wired or wireless LAN, Bluetooth (registered trademark), or Wireless USB (WUSB), a router for optical communication, a router for Asymmetric Digital Subscriber Line (ADSL), or a modem for various types of communications.

### <3. Conclusion>

As in the foregoing, the information processing device 10 according to the embodiment of the present disclosure includes the authentication unit 130 configured to perform authentication on the basis of collected sensor information. In addition, one of the features of the authentication unit 130 according to the embodiment of the present disclosure is that the unit authenticates a user on the basis of a single feature quantity extracted on the basis of sensor information collected by at least two sensors 110 and a single registered feature quantity extracted on the basis of sensor information collected in advance by the at least two sensors 110.

The above described configuration allows both reduction of processing burdens and assurance of security to be achieved in authentication using sensor information.

Although the preferred embodiments of the present disclosure have been described in detail with reference to the accompanying drawings as described above, the technical scope of the present disclosure is not limited to such examples. It is apparent that those having ordinary knowledge in the technical field of the present disclosure could conceive various modifications or revisions within the scope of the technical ideas set forth in the claims, and it should be understood that these also naturally fall within the technical scope of the present disclosure.

The steps related to the processing described herein do not necessarily have to be processed in chronological order in the flowcharts or the sequence diagrams. For example, the steps related to the processing by each device may be carried out in an order different from the order described or may be carried out in parallel.

The series of processing steps performed by each device described herein may be realized by using any software, hardware, and a combination of software and hardware. Programs as software are stored in advance for example in a storage medium (non-transitory media) provided inside or outside each device.

Then, each program is read into a RAM at the time of execution by a computer and executed by various types of processors. The recording medium is for example a magnetic disk, an optical disk, a magneto-optical disk, or a flash memory. Further, the above computer program may be distributed for example over a network without using the recording medium.

Further, the effects described herein are merely explanatory or exemplary and are not intended as limiting. In other words, the techniques according to the present disclosure may exhibit other effects apparent to those skilled in the art from the description herein, in addition to or in place of the above effects.

Further, the following configurations also fall within the technical scope of the present disclosure.
(1) An information processing device including an authentication unit configured to authenticate a user on the basis of collected sensor information, wherein
   the authentication unit authenticates a user on the basis of a single feature quantity extracted on the basis of sensor information collected by at least two sensors and a single registered feature quantity extracted on the basis of sensor information collected in advance by the at least two sensors.
(2) The information processing device according to (1), wherein
   the authentication unit authenticates the user on the basis of a single feature quantity extracted from integrated sensor information obtained by integrating pieces of sensor information acquired by the at least two sensors and the registered feature quantity.
(3) The information processing device according to (2), wherein
   the authentication unit verifies the authenticity of the user when the similarity between the single feature quantity extracted from the integrated sensor information and the registered feature quantity exceeds a threshold.
(4) The information processing device according to (3), wherein
   the authentication unit authenticates the user using a discriminator that outputs the similarity on the basis of a single feature quantity extracted from the input sensor information and the registered feature quantity.
(5) The information processing device according to any one of (2) to (4), wherein
   the authentication unit extracts a single feature quantity from the integrated sensor information using an extractor generated by learning based on such a loss criterion that the similarity between feature quantities extracted from the integrated sensor information and derived from the same user is high.
(6) The information processing device according to any one of (2) to (5) further including an integration unit configured to generate the integrated sensor information.
(7) The information processing device according to (6), wherein
   the integration unit integrates partial sensor information each extracted from sensor information acquired by the at least two sensors and generates the integrated sensor information.
(8) The information processing device according to (7), wherein
   the integration unit specifies a high-certainty region which corresponds to user biometric information with high certainty in each piece of sensor information acquired by the at least two sensors and extracts the partial sensor information from each of the high-certainty regions.
(9) The information processing device according to any one of (1) to (8) further including the at least two sensors.
(10) The information processing device according to (9), wherein
   the at least two sensors each acquire the same kind of biometric information.
(11) The information processing device according to (9), wherein
   the at least two sensors acquire different kinds of biometric information.
(12) The information processing device according to any one of (9) to (11), wherein
   the at least two sensors include an imaging sensor.
(13) The information processing device according to (12), wherein
   the at least two sensors capture an image of a fingerprint of the user.
(14) The information processing device according to any one of (9) to (13), wherein
   each of the at least two sensors is provided in a position where biometric information about the user is highly likely to be acquired when the user wears or uses the information processing device.
(15) The information processing device according to any one of (1) to (14) configured as a wearable device.
(16) The information processing device according to (15) configured as an earable device mounted on the user's ear.
(17) An information processing method including authenticating a user on the basis of collected sensor information using a processor, wherein
   the authentication step further includes authenticating a user on the basis of a single feature quantity extracted on the basis of sensor information collected by at least two sensors and a single registered feature quantity extracted on the basis of sensor information collected in advance by the at least two sensors.
(18) A program causing a computer to function as an information processing device including an authentication unit configured to authenticate a user on the basis of collected sensor information, wherein
   the authentication unit authenticates a user on the basis of a single feature quantity extracted on the basis of sensor information collected by at least two sensors and a single registered feature quantity extracted on the basis of sensor information collected in advance by the at least two sensors.

### [Reference Signs List]

- 10: Information processing device
- 110: Sensor
- 120: Integration unit
- 130: Authentication unit
- 140: Storage unit
- 150: Notification unit

## Claims

1. An information processing device comprising an authentication unit configured to authenticate a user on the basis of collected sensor information, wherein
the authentication unit authenticates a user on the basis of a single feature quantity extracted on the basis of sensor information collected by at least two sensors and a single registered feature quantity extracted on the basis of sensor information collected in advance by the at least two sensors.

2. The information processing device according to claim 1, wherein
the authentication unit authenticates the user on the basis of a single feature quantity extracted from integrated sensor information obtained by integrating pieces of sensor information acquired by the at least two sensors and the registered feature quantity.

3. The information processing device according to claim 2, wherein
the authentication unit verifies the authenticity of the user when the similarity between the single feature quantity extracted from the integrated sensor information and the registered feature quantity exceeds a threshold.

4. The information processing device according to claim 3, wherein
the authentication unit authenticates the user using a discriminator that outputs the similarity on the basis of a single feature quantity extracted from the input sensor information and the registered feature quantity.

5. The information processing device according to claim 2, wherein
the authentication unit extracts a single feature quantity from the integrated sensor information using an extractor generated by learning based on such a loss criterion that the similarity between feature quantities extracted from the integrated sensor information and derived from the same user is high.

6. The information processing device according to claim 2 further comprising
an integration unit configured to generate the integrated sensor information.

7. The information processing device according to claim 6, wherein
the integration unit integrates partial sensor information each extracted from sensor information acquired by the at least two sensors and generates the integrated sensor information.

8. The information processing device according to claim 7, wherein
the integration unit specifies a high-certainty region which corresponds to user biometric information with high certainty in each piece of sensor information acquired by the at least two sensors and extracts the partial sensor information from each of the high-certainty regions.

9. The information processing device according to claim 1 further comprising
the at least two sensors.

10. The information processing device according to claim 9, wherein
the at least two sensors each acquire the same kind of biometric information.

11. The information processing device according to claim 9, wherein
the at least two sensors acquire different kinds of biometric information.

12. The information processing device according to claim 9, wherein
the at least two sensors include an imaging sensor.

13. The information processing device according to claim 12, wherein
the at least two sensors capture an image of a fingerprint of the user.

14. The information processing device according to claim 9, wherein
each of the at least two sensors is provided in a position where biometric information about the user is highly likely to be acquired when the user wears or uses the information processing device.

15. The information processing device according to claim 1 configured as a wearable device.

16. The information processing device according to claim 15 configured as an earable device mounted on the user's ear.

17. An information processing method comprising authenticating a user on the basis of collected sensor information using a processor, wherein
the authentication step further comprises authenticating a user on the basis of a single feature quantity extracted on the basis of sensor information collected by at least two sensors and a single registered feature quantity extracted on the basis of sensor information collected in advance by the at least two sensors.

18. A program causing a computer to function as an information processing device comprising an authentication unit configured to authenticate a user on the basis of collected sensor information, wherein
the authentication unit authenticates a user on the basis of a single feature quantity extracted on the basis of sensor information collected by at least two sensors and a single registered feature quantity extracted on the basis of sensor information collected in advance by the at least two sensors.
